# EUROPEAN PATENT SPECIFICATION

(11) **EP 1 483 149 B1**
(45) Date of publication and mention of the grant of the patent: **22.08.2007**
(21) Application number: 03739642.1
(22) Date of filing: 14.02.2003
(51) Int. Cl.: B62D 37/02, F03G 7/06

(54) **CONTROLLED-DEFORMATION PANEL**
PLATTE MIT GESTEUERTER VERFORMUNG
PANNEAU A DEFORMATION CONTROLEE

(30) Priority: 15.02.2002 IT TO20020134
(43) Date of publication of application: 08.12.2004
(73) Proprietor: FERRARI S.p.A., 41100 Modena (IT)
(72) Inventor: CALDIROLA, Luca, I-20025 Legnano (IT); UBOLDI, Monica, I-41028 Serramazzoni (IT); VISCONTI, Amedeo, I-10138 Torino (IT)
(74) Representative: Jorio, Paolo
(86) International application number: PCT/IT2003/000078
(87) International publication number: WO 2003/068584

(56) References cited:
- WO-A-98/24690
- DE-A- 10 026 264
- US-A- 5 150 864
- US-A- 6 124 662

## Description

### TECHNICAL FIELD

The present invention relates to a controlled-deformation panel.

More specifically, the present invention relates to a controlled-deformation panel which is particularly suitable for producing high-performance vehicle body parts, to which the following description refers purely by way of example.

### BACKGROUND ART

As is known, most currently produced high-performance cars feature a number of external aerodynamic negative-lift appendixes, commonly known as "stabilizers" or "spoilers", appropriately arranged on the vehicle body to increase vertical load on the moving vehicle and so improve road-holding and traction.

Such spoilers, however, have the major drawback of impairing the overall aerodynamic efficiency of the vehicle by greatly increasing the power required to bring the vehicle up to and maintain any given speed, i.e. of increasing drag.

By way of a solution to the problem, some car manufacturers have equipped certain models with movable spoilers capable of assuming, on command, a rest or minimum-angle position impairing the aerodynamic efficiency of the vehicle as little as possible, or an extracted maximum-angle position to increase the vertical load on the moving vehicle and so improve road-holding and traction.

Movable spoilers obviously call for a number of electric and/or pneumatic actuators to move them between the rest or minimum-angle and the extracted or maximum-angle positions; and an electronic central control unit to coordinate operation of the electric and/or pneumatic actuators so as to adjust the aerodynamic configuration of the vehicle without producing a sharp change in the attitude, and so endangering the stability, of the vehicle.

To improve overall aerodynamic efficiency, in recent years, prototype high-performance vehicles have been designed in which the increase in vertical load depends, not on spoilers, but on a number of body plates capable, on command, of changing shape to alter the aerodynamic profile of the vehicle, i.e. the shape of the body, to increase the negative lift of the vehicle when necessary, i.e. generate a vertical load which presses the vehicle down onto the road.

Unfortunately, currently used panels are so expensive to produce as to virtually rule out any possibility of normal mass production.

WO-9824690 discloses a controlled-deformation panel which comprises a sheet of elastically deformable material and a bundle of tension wires inserted at least partly inside the sheet, close to one of the two lateral surfaces of the sheet. The tension wires are anchored at their ends to the body of the sheet and the panel also comprises wire-tensioning means for selectively exerting mechanical pull on the tension wires to produce controlled deformation of the body of the sheet; this wire-tensioning means being made of shape-memory metal material.

The major drawback of these controlled-deformation panels is that their production is very expensive.

### DISCLOSURE OF THE INVENTION

It is an object of the present invention to provide controlled-deformation body panels of acceptable production cost.

According to the present invention, there is provided a car having a controlled-deformation panel according to the characterizing part of claim 1.

### BRIEF DESCRIPTION OF THE DRAWINGS

A non-limiting embodiment of the present invention will be described by way of example with reference to the accompanying drawings, in which:
Figure 1 shows a view in perspective, with parts in section and parts removed for clarity, of a controlled-deformation panel.
Figure 2 shows a view in perspective, with parts in section and parts removed for clarity, in accordance with the teachings of the present invention;
Figure 3 shows a section of a component part of the controlled-deformation panel in Figure 2;
Figure 4 shows a view in perspective of a vehicle featuring a number of controlled-deformation body panels as shown in the above Figures.

### BEST MODE FOR CARRYING OUT THE INVENTION

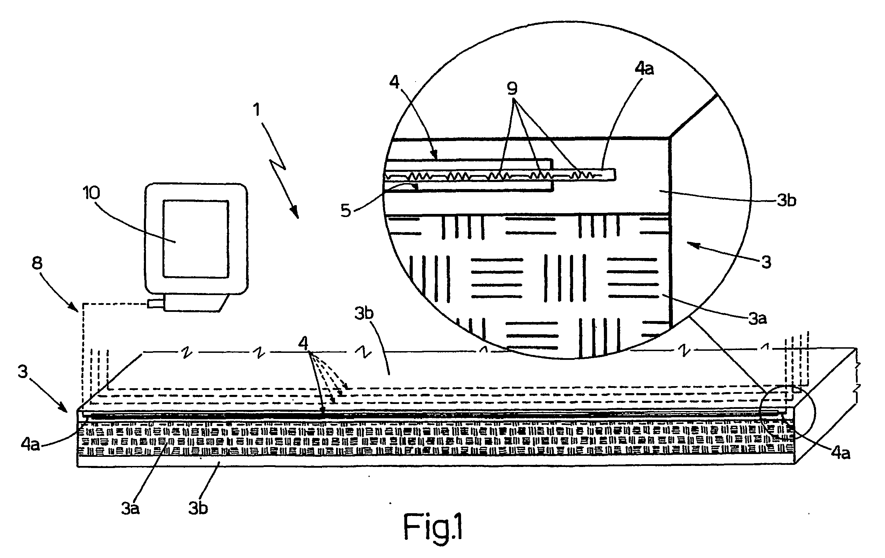

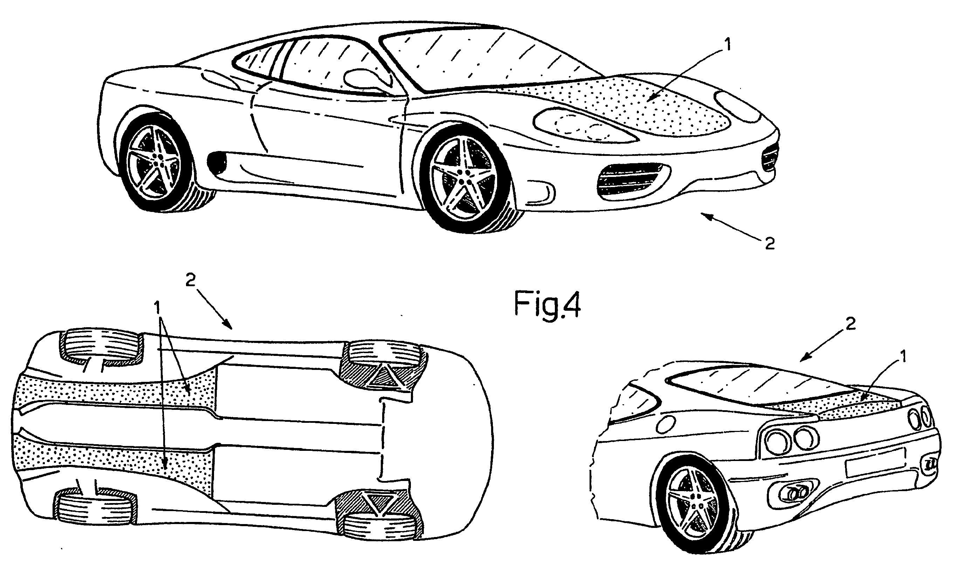

With reference to Figures 1 and 4, number 1 indicates as a whole a controlled-deformation panel, which may be used to advantage for producing body parts of a vehicle 2, to alter, on command, the aerodynamic profile, i.e. the body shape, and so control negative lift of, the vehicle.

For example, with reference to Figure 4, controlled-deformation panel 1 may be used to advantage for producing the hood, luggage compartment lid, and/or the flat-underbody channels of a vehicle 2.

With reference to Figure 1, panel 1 comprises a sheet 3 of elastically deformable material, e.g. a plastic material with or without reinforcing fibers; and a bundle of tension wires 4 inserted inside sheet 3, close to one of the two lateral surfaces of sheet 3. Tension wires 4 are anchored at both ends 4a to the body of sheet 3; and panel 1 also comprises wire-tensioning means for selectively exerting mechanical pull on tension wires 4 to produce controlled deformation of the body of sheet 3.

More specifically, the tensioning means of panel 1 reduce tension wires 4, on command, to a predetermined total length to produce controlled deformation of the body of sheet 3.

The type of deformation imposed on sheet 3 obviously depends on the spatial distribution of tension wires 4 inside the body of sheet 3.

In the example shown, sheet 3 is flat and rectangular, and comprises a central supporting core 3a of Nomex (i.e. a sheet of honeycomb aluminium of given thickness); and two cover sheets 3b of composite material (e.g. glass fiber or carbon fiber embedded in an epoxy resin matrix) covering central core 3a on opposite sides. Sheet 3 may obviously also be defined by a one-piece sheet of composite material of given thickness.

In the example shown, tension wires 4 are housed and slide inside tubular sheaths 5 embedded in one of the two cover sheets 3b, are parallel to the two minor lateral edges of sheet 3, and are anchored to the body of sheet 3, at the major lateral edges of sheet 3, so that contraction, i.e. a reduction in the total length, of the wires causes the body of sheet 3 to curve into a semicylindrical shell.

With reference to Figure 1, in a first embodiment of panel 1, tension wires 4 are defined by wires made, along at least a portion of their length, of shape-memory metal material (e.g. a titanium-nickel, copper-zinc-aluminium, or copper-aluminium-nickel alloy), and able to assume a predetermined length Lₒ at a temperature equal to or greater than a predetermined temperature Tₒ.

Shape-memory materials are metal materials capable of recovering a set macroscopic shape simply as a result of a change in temperature or applied stress, and of effecting a solid-state phase transformation in which the start and end phases are both solid structures differing only as regards the crystallographic arrangement.

Such a solid-state phase transformation is commonly known as "thermoplastic martensitic transformation", and the temperature at which it occurs as "transition temperature".

More specifically, shape-memory materials are capable of assuming two different crystallographic configurations, depending on temperature: a first, commonly known as the martensitic phase, is typical of low temperatures and characterized by a high degree of deformability and a low yield point; a second, commonly known as the austenitic phase, is typical of high temperatures and characterized by a high degree of structural rigidity combined with a tendency to assume a predetermined macroscopic shape stored in the material itself by appropriate heat treatment.

In a first embodiment of panel 1, each tension wire 4 is defined by a wire made entirely of shape-memory metal material appropriately heat treated to assume, in the austenitic phase, a macroscopic shape in which the total length of the wire equals length Lₒ.

When brought to a temperature equal to or greater than the "transition temperature", i.e. to a temperature equal to or greater than temperature Tₒ, tensions wires 4 therefore all tend to assume the set length Lₒ, thus deforming the body of sheet 3. More specifically, since length Lₒ is less than the width d of sheet 3 at rest, when the temperature of tension wires 4 is equal to or greater than temperature Tₒ, the body of sheet 3 tends to deform elastically and curve to bring the major lateral edges of sheet 3 closer together.

Conversely, in the martensitic phase, i.e. below temperature Tₒ, the shape-memory metal material of which tension wires 4 are made has such a low yield point as to be less than the springback force which tends to restore sheet 3 to its original flat shape, so that tension wires 4 extend to a total length greater than length Lₒ, and sheet 3 again assumes its natural, i.e. flat, shape.

Tension wires 4 made at least partly of shape-memory metal material therefore also act as linear actuators capable, on command, of reducing the total length of tension wires 4 to length Lₒ to produce controlled deformation of the body of sheet 3.

To contract tension wires 4, panel 1 has a wire-heating device 8, which, on command, heats tension wires 4, or the portions of tension wires 4 made of shape-memory metal material, to a temperature equal to or greater than the "transition temperature", i.e. to temperature Tₒ, so as to bring about the solid-state transformation phase typical of above cited shape-memory metal materials (i.e. "thermoplastic martensitic transformation").

In the example shown, wire-heating device 8 comprises a number of electric resistors 9 arranged along tension wires 4; and an electronic central control unit 10, which, on command, feeds a given, not necessarily constant, electric current through the electric resistors to Joule-effect heat tension wires 4. Electric resistors 9 may be defined either by tension wires 4 themselves, which, being made of metal alloy, are electrically conductive, or by a number of wires made of electrically conductive material and coiled about tension wires 4.

In short, in the first embodiment of panel 1, the wire-tensioning means comprise tension wires 4, or the portions of tension wires 4 made of shape-memory metal material; and wire-heating device 8.

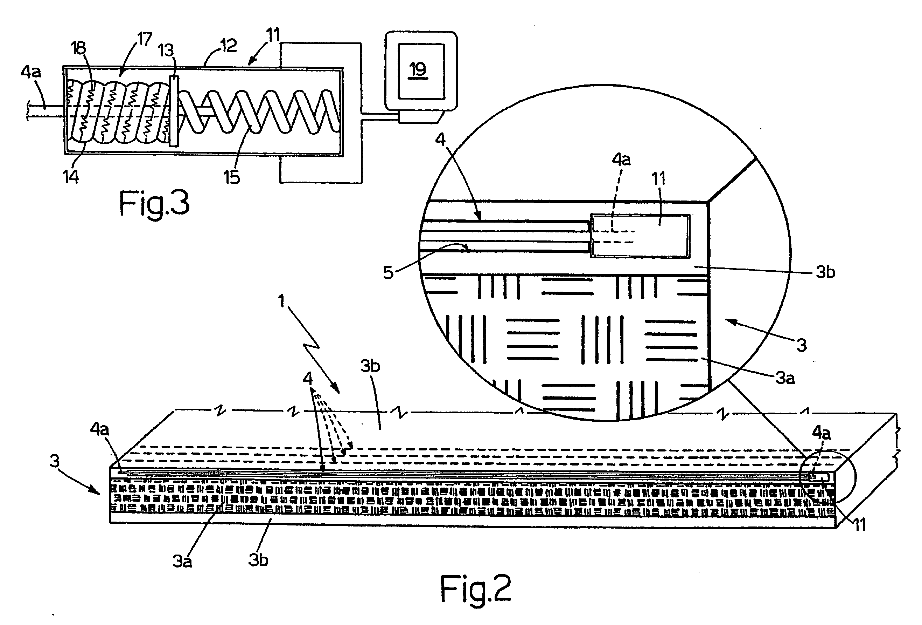

With reference to Figures 2 and 3, according to the invention, tension wires 4 are made entirely of steel, carbon fiber, or other high-strength material; and the wire-tensioning means comprise a number of linear actuators 11, each located along a respective tension wire 4 of panel 1, and for reducing, on command, the total length of respective tension wire 4 to length Lₒ to produce controlled deformation of the body of sheet 3.

In the example shown, each linear actuator 11 is located at one of the two ends 4a of respective tension wire 4, connects end 4a to the body of sheet 3 (the other end 4a of tension wire 4 is anchored to the body of sheet 3), and comprises: a hollow cartridge 12 anchored to the body of sheet 3 and coaxial with end 4a of tension wire 4; a piston 13 mounted to slide axially inside hollow cartridge 12; and two precompressed helical springs aligned with each other and housed inside hollow cartridge 12, on opposite sides of piston 13.

The two precompressed helical springs, hereinafter indicated 14 and 15, act on piston 13 in opposition to each other to keep piston 13 in a position of equilibrium depending on the coefficient of elasticity of helical springs 14 and 15.

End 4a of tension wire 4 is fitted to slide through the shell of hollow cartridge 12, and is fixed to the body of piston 13; and one of helical springs 14, 15 - in the example shown, helical spring 14 - is made of shape-memory metal material appropriately heat treated so that the body of the spring has a predetermined axial length Hₒ in the austenitic phase.

When brought to a temperature equal to or greater than the "transition temperature", i.e. to a temperature equal to or greater than temperature Tₒ, helical spring 14 therefore tends to assume axial length Hₒ, thus forcing piston 13 to assume, inside hollow cartridge 12, a new position of equilibrium in which the total length of the whole defined by tension wire 4 and relative linear actuator 11 equals the length Lₒ required to produce predetermined controlled deformation of the body of sheet 3.

The axial travel of piston 13 from the position of equilibrium corresponding to helical spring 14 in the martensitic phase to the equilibrium position corresponding to helical spring 14 in the austenitic phase obviously determines the amount by which the total length of tension wires 4 is reduced.

As in the first embodiment, the wire-tensioning means in the second embodiment of panel 1 also comprise a device for controlling the linear actuators 17, and which, on command, brings spring 14 to a temperature equal to or greater than the "transition temperature", i.e. to temperature Tₒ, to bring about the solid-state phase transformation typical of shape-memory metal materials (i.e. "thermoplastic martensitic transformation").

Like wire-heating device 8, device controlling the linear actuators 17 comprises, in the example shown, a number of electric resistors 18 distributed along the body of helical spring 14; and an electronic central control unit 19, which, on command, feeds a given, not necessarily constant, electric current through electric resistors 18 to Joule-effect heat the body of spring 14.

In this case, too, electric resistors 18 may be defined either by the body of helical spring 14, which, being made of metal alloy, is also electrically conductive, or by a number of wires made of electrically conductive material and coiled about the body of helical spring 14.

Operation of controlled-deformation panel 1 is easily deducible from the foregoing description with no further explanation required.

The advantages of controlled-deformation panel 1 as described and illustrated herein are obvious: production cost is compatible with normal mass production, so that mass produced vehicles can also benefit from all the advantages, in terms of aerodynamic efficiency, derived from a vehicle body with no external spoilers, which increase drag, fuel consumption, and pollution.

Another advantage of controlled-deformation panel 1 lies in it being extremely straightforward structurally, and therefore highly reliable.

For example, as opposed to being substantially flat, sheet 3 may be curved; in which case, tension wires 4 may be used to accentuate or reduce the curvature of sheet 3 on command.

In a further embodiment of panel 1, sheet 3 may comprise a number of reinforcing ribs projecting from one of the two faces of sheet 3, perpendicularly to the bundle of tension wires 4; and the tubular sheaths 5 housing tension wires 4 are fitted successively through all the reinforcing ribs, so that sheath portions embedded inside the reinforcing ribs alternate with sheath portions outside sheet 3.

## Claims

1. Car (2) comprising a body which is provided with body parts capable to alter, on command, the aerodynamic profile of the body and so control negative lift of the vehicle; the said car (2) being **characterized in that** said body parts comprises at least one controlled-deformation panel (1) which in turn comprises a sheet (3) of elastically deformable material and a bundle of tension wires (4) inserted at least partly inside the sheet (3), close to one of the two lateral surfaces of the sheet (3); the tension wires (4) being anchored at the ends (4a) to the body of the sheet (3), and the panel (1) also comprising wire-tensioning means (11, 17) for selectively exerting mechanical pull on the tension wires (4) to produce controlled deformation of the body of the sheet (3); said tension wires (4) being made of high-strength material and said wire-tensioning means (11, 17) comprising linear actuators (11) being made at least partly of shape-memory metal material, located along said tension wires (4) so that one of the two ends (4a) of each tension wire (4) is connected to the body of the sheet (3) by a respective linear actuator (11), to reduce on command the total length of said tension wires (4).

2. Car as claimed in Claim 1, **characterized in that** each said linear actuator (11) comprises a hollow cartridge (12) anchored to the body of the sheet (3), a piston (13) mounted to slide axially inside the hollow cartridge (12), and two elastic members (14, 15) housed inside the hollow cartridge (12), on opposite sides of the piston (13), so as to act on the piston (13) in opposition to each other; the piston (13) being fixed to the end (4a) of said tension wire (4) and one (14) of said two elastic members (14, 15) being made of heat treated shape-memory metal material, so that the body of the elastic member has a predetermined axial length (HO) in the austenitic phase.

3. Car as claimed in Claim 2, **characterized in that** said wire-tensioning means (11, 17) comprise heating means (17) for bringing, on command, said linear actuators (11) to a temperature equal to, or greater than a given transition temperature (Tₒ), so as to activate the solid-state phase transformation typical of shape-memory metal materials.

4. Car as claimed in Claim 3, **characterized in that** said heating means (17) comprise a number of electric resistors (18) distributed along the body of said elastic member (14) made of shape-memory metal material, and an electronic central control unit (19) which, on command, feeds electric current through said electric resistors (18) to Joule-effect heat the body of said elastic member (14).

## Patentansprüche

1. Kraftfahrzeug (2), welches aufweist: eine Karosserie, welche mit Karosserieteilen ausgestattet ist, welche auf Befehl das aerodynamische Profil der Karosserie verändern und somit das negative Anheben des Fahrzeugs steuern können; wobei das Kraftfahrzeug (2) **dadurch gekennzeichnet ist, dass** die Karosserieteile aufweisen: wenigstens eine Platte (1) mit gesteuerter Verformung, welche wiederum aufweist: eine dünne Platte (3) aus elastischem verformbaren Material und ein Bündel von Zugdrähten (4), welche wenigstens teilweise innerhalb der dünnen Platte (3) nahe zu einer der zwei lateralen Oberflächen der dünnen Platte (3) eingefügt sind; wobei die Zugdrähte (4) an den Enden (4a) an dem Körper der dünnen Platte (3) verankert sind und die Platte (1) auch eine Drahtzugeinrichtung (11, 17) aufweist, um selektiv einen mechanischen Zug auf die Zugdrähte (4) auszuüben, um eine gesteuerte Verformung des Körpers der dünnen Platte (3) herzustellen; wobei die Zugdrähte (4) aus hochfestem Material hergestellt sind und die Drahtzugeinrichtung (11, 17) lineare Aktoren (11) aufweist, welche wenigstens teilweise aus Formgedächtnis-Metallmaterial hergestellt sind, welche entlang der Zugdrähte (4) platziert sind, so dass eines der beiden Enden (4a) jedes Zugdrahtes (4) mit dem Körper der dünnen Platte (3) durch jeweils einen linearen Aktor (11) verbunden ist, um auf Befehl die Gesamtlänge des Zugdrahtes (4) zu reduzieren.

2. Kraftfahrzeug nach Anspruch 1, **dadurch gekennzeichnet, dass** jeder dieser linearen Aktoren (11) eine hohle Hülse (12), welche an dem Körper der dünnen Platte (3) verankert ist, einen Druckkolben (13), welcher so befestigt ist, dass er innerhalb der hohlen Hülse (12) gleitet, und zwei elastische Glieder (14, 15), welche innerhalb der hohlen Hülse (12) aufgenommen sind, auf gegenüberliegenden Seiten des Druckkolbens (13) aufweist, um so auf den Druckkolben (13) in Opposition zueinander einzuwirken; wobei der Druckkolben (13) an dem Ende (4a) des Zugdrahtes (4) befestigt ist und eines (14) der zwei elastischen Glieder (14, 15) aus wärmebehandeltem Formgedächtnis-Metallmaterial hergestellt ist, so dass das Gehäuse des elastischen Gliedes eine vorher festgelegte axiale Länge (HO) in der austenitischen Phase besitzt.

3. Kraftfahrzeug nach Anspruch 2, **dadurch gekennzeichnet, dass** die Drahtzugeinrichtung (11, 17) eine Wärmeeinrichtung (17) aufweist, um auf Befehl die linearen Aktoren (11) auf eine Temperatur gleich oder größer als eine gegebene Übergangstemperatur (T₀) bringen, um so die Festkörperphasenumformung die typisch für Formgedächtnis-Metallmaterialien ist zu aktivieren.

4. Kraftfahrzeug nach Anspruch 3, **dadurch gekennzeichnet, dass** die Erwärmungseinrichtung (17) eine Anzahl von elektrischen Widerständen (18), welche entlang des Grundkörpers des elastischen Gliedes (14), welches aus Formgedächtnis-Metallmaterial hergestellt ist, verteilt sind, und eine elektronische Zentralsteuereinheit (19) aufweist, welche auf Befehl elektrischen Strom durch die elektrischen Widerstände (18) führt, um durch Joule-Effekt den Grundkörper des elastischen Gliedes (14) zu erwärmen.

## Revendications

1. Automobile (2) dotée d'une carrosserie comportant des pièces capables de modifier, à la demande, le profil aérodynamique de la carrosserie et de contrôler ainsi la portance négative du véhicule ; ladite automobile (2) étant **caractérisée en ce que** lesdites pièces de carrosserie comprennent au moins un panneau à déformation contrôlée (1) qui comprend lui-même une feuille (3) d'un matériau déformable élastiquement et un jeu de fils de tension (4) inséré au moins partiellement dans la feuille (3), à proximité de l'une des deux surfaces latérales de la feuille (3) ; les fils de tension (4) étant fixés aux extrémités (4a) du corps de la feuille (3) et le panneau (1) comprenant également un moyen de mise en tension des fils (11, 17) permettant d'exercer sélectivement une traction mécanique sur les fils de tension (4) afin de produire une déformation contrôlée du corps de la feuille (3) ; lesdits fils de tension (4) étant constitués d'un matériau à haute résistance et ledit moyen de mise en tension des fils (11, 17) comprenant des actionneurs linéaires (11), réalisés au moins en partie dans un matériau à mémoire de forme, localisés le long des dits fils de tension (4) d'une manière telle que l'une des deux extrémités (4a) de chaque fil de tension (4) est reliée au corps de la feuille (3) par un actionneur linéaire respectif (11) pour réduire à la demande la longueur totale des dits fils de tension (4).

2. Automobile selon la revendication 1 **caractérisée en ce que** chacun des dits actionneurs linéaires (11) comprend une cartouche creuse (12) fixée au corps de la feuille (3), un piston (13) monté de façon à coulisser dans le sens axial à l'intérieur de la cartouche creuse (12) et deux éléments élastiques (14, 15) logés à l'intérieur de la cartouche creuse (12), de part et d'autre du piston 13, de façon à agir sur le piston (13) de manière antagoniste ; le piston (13) étant fixé à l'extrémité (4a) du dit fil de tension (4) et l'un (14) des dits éléments élastiques (14, 15) étant réalisé dans un matériau métallique à mémoire de forme traité thermiquement, d'une manière telle que le corps de l'élément élastique a une longueur axiale prédéterminée (HO) dans la phase austénitique.

3. Automobile selon la revendication 2 **caractérisée en ce que** ledit moyen de mise en tension des fils (11, 17) comprend un moyen de chauffage (17) destiné à amener, à la demande, lesdits actionneurs linéaires (11) à une température égale ou supérieure à une température de transition donnée (T0) de façon à activer la transformation de phase à l'état solide caractéristique des matériaux métalliques à mémoire de forme.

4. Automobile selon la revendication 3 **caractérisée en ce que** ledit moyen de chauffage (17) comprend un certain nombre de résistances électriques (18) réparties le long du corps du dit élément élastique (14) en matériau à mémoire de forme, et un module central de commande électronique (19) qui envoie à la demande un courant électrique à travers lesdites résistances électriques (18) afin de chauffer par effet Joule le corps du dit élément élastique (14).
